Europäisches Patentamt

European Patent Office

Office européen des brevets

(19)

(11) Numéro de publication: **0 202 994**

**A1**

(12) **DEMANDE DE BREVET EUROPEEN**

(21) Numéro de dépôt: 86400987.3

(22) Date de dépôt: 07.05.86

(51) Int. Cl.⁴: **G02B 6/44** , G02B 6/24

(30) Priorité: **10.05.85 FR 8507137**

(43) Date de publication de la demande:
**26.11.86 Bulletin 86/48**

(84) Etats contractants désignés:
**AT BE CH DE GB IT LI LU NL SE**

(71) Demandeur: **COMPAGNIE GENERALE DE CONSTRUCTIONS TELEPHONIQUES Société Anonyme dite:**
**251, rue de Vaugirard**
**F-75740 Paris Cedex 15(FR)**

(72) Inventeur: **Galas, Albert Robert Charles**
**47, avenue de la Paix**
**F-93150 Le Blanc Mesnil(FR)**
Inventeur: **Milanowski, Michel**
**9, rue des Chardonnerets**
**F-95620 Parmain(FR)**
Inventeur: **Capelle, Bruno**
**Convenant Coadou**
**F-22420 Plouaret(FR)**
Inventeur: **Lissilour, Albert**
**Route de Tour Ar Lan**
**F-22730 Tregastel(FR)**

(74) Mandataire: **Loraux, Jean-Claude Georges**
**251, rue de Vaugirard**
**F-75740 Paris Cédex 15(FR)**

(54) **Point de branchement pour câbles à fibres optiques.**

(57) L'invention concerne un point de branchement pour câbles à fibres optiques qui permet d'effectuer la connexion entre des fibres optiques reliées, d'une part, à un centre exploitant les signaux échangés dans un réseau de vidéocommunication et, d'autre part, à des installations terminales d'équipements d'usager d'un tel réseau.

Le point de branchement comporte une platine - (22) comprenant sur chaque face au moins une empreinte servant au logement d'un élément (18, 20, 60) pour le stockage des longueurs de fibres optiques mises en réserve et de l'élément (21) recevant le coupleur optique. Les éléments (16) pour la connexion optique des fibres sont montés sur une plaque (17) associée à une partie sans empreinte (23) de la platine (22).

L'invention trouve une application dans le domaine des installations du réseau de vidéocommunications.

# FIG.2

## Point de branchement pour câbles à fibres optiques

La présente invention concerne un équipement pour la connexion de câbles à fibres optiques et, plus particulièrement, un équipement de ce type appelé "point de branchement" comportant des dispositions qui, d'une part, facilitent le travail d'intervention des agents ayant en charge le réseau de câbles à fibres optiques et, d'autre part, permettent une extension rapide et simple de la capacité de raccordement initiale du point de branchement.

Dans un réseau câblé de vidéocommunication, l'acheminement des diverses informations est assuré, notamment, pas des câbles à fibres optiques. L'architecture de ce réseau se présente sous la forme hiérarchisée que l'on a déjà employée, par exemple, dans les réseaux téléphoniques à câbles métalliques ; c'est ainsi qu'un même centre d'exploitation peut desservir des installations terminales d'équipements d'usager disséminées géographiquement grâce à un réseau de transport par fibres optiques qui relie le centre d'exploitation à un plusieurs centres de distributon, eux-mêmes desservant chacun un certain nombre d'installations d'usager.

Néanmoins, la desserte de ces installations à partir d'un centre de distribution ne se fait pas directement. En effet, chaque installation terminale regroupe dans un même boîtier de raccordement les fibres desservant les divers coffrets d'adaptation propres aux équipements de l'installation-tels que télévision, son haute-fidélité, téléphone. A leur tour, plusieurs de ces boîtiers de raccordement situés dans des installations terminales géographiquement proches -comme ce peut être le cas de logements d'un même palier ou d'un même escalier -sont concentrés sur un même équipement -le point de branchement -qui, lui, est relié au centre de distribution. Concrètement, cela signifie que les câbles optiques desservant plusieurs installations terminales -au maximum huit en l'occurrence -convergent vers ce point de branchement.

Cet équipement fait l'objet de nombreuses contraintes. En effet, selon le voisinage des boîtiers de raccordement d'installations terminales qu'il dessert, il peut être implanté dans les gaines techniques d'immeuble, sur façade, sur appui ou en borne pavillonnaire. Il doit donc protéger efficacement les raccordements qu'il abrite contre les agressions provenant de l'environnement, entre autres les chocs, l'écrasement, les variations de température, l'humidité, les pénétrations d'insectes et de poussières. Mais un tel équipment a aussi un rôle important, celui de faciliter le travail des agents qui interviennent dans le raccordement des câbles optiques et leur maintenance : il doit permettre un accès aisé aux fibres, la mise en place ou le retrait d'un câble sans avoir d'influence sur les connexions établies, l'intervention dans les meilleures conditions, par exemple au sol et à l'abri des intempéries, les manipulations répétées des fibres pour des opérations de branchement, de débranchement, de rebranchement qui sont des opérations délicates faisant appel à un outillage spécialisé.

Or, les équipements existants ne supportent pas toutes ces contraintes et ne donnent pas entière satisfaction. C'est donc l'un des objects de l'invention de répondre aux conditions posées par l'environnement et de faciliter les manipulations des fibres, leur dénudage, les opérations de connexion et de déconnexion ainsi que les travaux de maintenance.

A cette fin, le point de branchement comporte, entre autres, une platine générale agencée de telle sorte qu'elles serve de support à l'ensemble des éléments entrant dans la constitution du point de branchement ; elle est associée de façon amovible à un corps qui se fixe directement aussi bien sur un mur que sur un poteau et est protégée par un couvercle anti-thermique. L'agencement de cette platine générale a été conçu pour réduire le plus possible l'encombrement du point de branchement en utilisant notamment ses deux faces pour loger, en épaisseur, des dispositifs de stockage de réserve de fibres optiques. En effet, même dans sa version initiale dans laquelle le point de branchement dessert quatre installations terminales, il y a lieu de prévoir des loves de réserve pour chacune des cinq fibres du câble reliant le point de branchement au centre de distribution -quatre fibres pour la desserte de quatre installations terminales d'usager et une fibre pour le retour des informations transmises, via un coupleur optique, des usagers vers le centre d'exploitation, à travers le centre de distribution. Ces loves de réserve ne sont pas les seuls puisqu'il faut également prévoir ceux qui sont propres aux fibres de retour des installations d'usager, fibres qui aboutissent au coupleur optique.

Or, ces loves de réserve et les moyens qui permettent de les constituer sont encombrants ; mais cet encombrement a pu être nettement réduit grâce à l'utilisation de dipositifs de stockage qui ont fait l'objet d'une demande de brevet n° 85 07136 déposée le 10 Mai 1985 aux noms des sociétés demanderesses sous le titre : "Dispositif pour le stockage de fibres optiques". Ces dispositifs de stockage, de faible épaisseur, coopèrent chacun avec une face de la platine générale et ils peuvent en être facilement amovibles ce qui facilite le travail d'intervention des agents.

Cependant, si le point de branchement a une capacité initiale de desserte de quatre installations terminales, il doit permettre l'extension de cette desserte jusqu'à huit, tour en conservant la même nombre de fibres optiques -c'est-à-dire cinq-entre le centre de distribution et le point de branchement. Il faut alors faire appel à des éléments complémentaires -quatre démultiplexeurs-qui assurent chacun pour deux isntallations terminales la séparation des longueurs d'ondes propres à chaque usager, ainsi qu'à des bornes optiques complémentaires de celles de l'équipement initial.

A cette fin, le point de branchement comporte des logements latéraux permettant de recevoir ces démultiplexeurs par simple introduction et maintien par des pattes d'encliquetage, ce qui facilite grandement le travail d'extension. Il en va de même des bornes optiques correspondant au passage de la desserte de quatre à huit installations terminales puisque leur emplacement est prévu comme un prolongement des bornes optiques de l'équipement initial sans que pour autant l'épaisseur de l'ensemble en soit modifié.

Par ailleurs, la partie basse du corps du point de branchement comprend deux bossages qui servent au montage d'un plateau de travail. En effet, lors d'opérations de branchement ou de rebranchement des fibres optiques, l'agent d'intervention est amené à utiliser un outillage et des produits spécifiques au dénudage de la gaine des fibres et, pour ce faire, il lui est indispensable de disposer d'un plan de travail susceptible de supporter en toute sécurité produits et matériel à manipuler. Le plateau de travail est donc amovible et n'est mis en place sur le point de branchement que si l'agent d'intervention le juge nécessaire.

Les différents objets et caractéristiques de l'invention ressortiront de la description qui va être faite maintenant, à titre d'exemple non limitatif, en se reportant aux figures annexées qui représentent :

-la figure 1, une vue schématique du matériel d'un point de branchement dans l'équipement correspondant à la situation initiale et du câblage correspondant ;

-la figure 2, une vue en perspective des éléments essentiels constituant l'équipement du point de branchement dans la situation illustrée par la figure 1 ;

-la figure 3, une vue en perspective des éléments de la figure 2 après assemblage et des éléments du contenant chargé de les recevoir ;

-la figure 4, une vue en perspective des éléments équipant le point de branchement - couvercle de protection retiré-dans la situation correspondant à sa capacité finale ;

-la figure 5, une vue schématique du matériel d'un point de branchement dans l'équipement correspondant à la situation finale et du câblage correspondant.

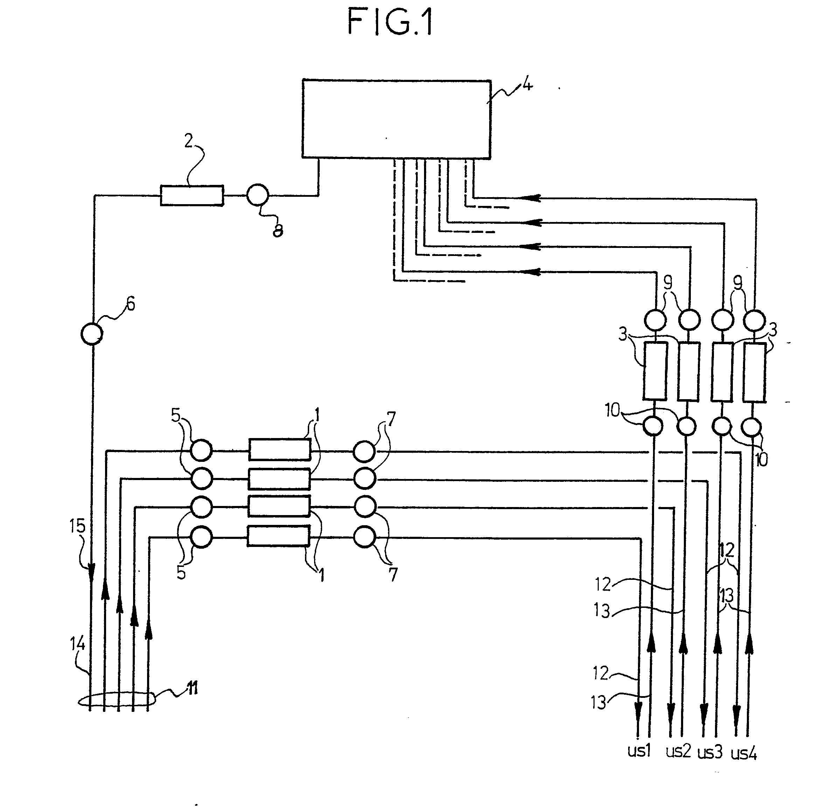

On va commencer la description en se reportant tout d'abord à la figure 1 grâce à laquelle on peut expliquer le principe d'exploitation du point de branchement quand celui-ci se trouve dans son état initial, c'est-à-dire en état de desservir quatre installations terminales d'équipement d'usager. Pour ce faire, le point de branchement comporte des éléments de connectique optique 1, 2, 3 -que l'on appellera "bornes optiques"-et qui assurent chacune la connexion bout à bout de deux fibres à raccorder, le coupleur optique 4 et les longueurs de fibres mises en réserve qui sont symbolisées par les cercles 5, 6, 7, 8, 9 et 10.

Le point de branchement est relié au réseau de distribution -au centre de distributon-par un câble à cing fibres 11 et il dessert quatre installations d'usager Us1 à Us4 au moyen de quatre câbles à paire optique 12 et 13. Quatre des cinq fibres du câble 11 sont prévues pour le branchement de ces quatre installations d'usager ; c'est la raison pour laquelle elles aboutissent aux bornes optiques 1 dont l'autre extrémité connecte les fibres 12 de chaque usager Us1 à Us4. La cinquième fibre 14 du câble 9 est une fibre dite "de retour" -comme l'indique la direction de la flèche 15-c'est-à dire qu'elle permet d'acheminer vers le centre d'exploitation les informations et les ordres transmis par les usagers Us1 à Us4 au moyen de la fibre de retour 13 qui est propre à leur installation. Ces quatre fibres de retour aboutissent chacune à une borne optique 3 dont l'autre extrémité est reliée au coupleur optique 4 ; ce dernier a pour rôle de coupler optiquement les quatre fibres 13 venant des usagers à une seule fibre -via la borne optique 2 -la fibre de retour 14 du câble 11 reliant le point de branchement au réseau de distribution. Mais on a vu que les longueurs de réserve sont à prévoir pour les fibres de manière à pouvoir intervenir sur les connexions optiques établies, opération qui nécessite le dénudage d'une partie de fibre vierge, donc consomme une partie de sa longueur disponible en réserve. C'est la raison pour laquelle on voit sur la figure 1, de part et d'autre des bornes optiques 1, 2 et 3, des longueurs de fibres 5, 6, 7, 8, 9, et 10 qui constituent les réserves permettant les interventions en question.

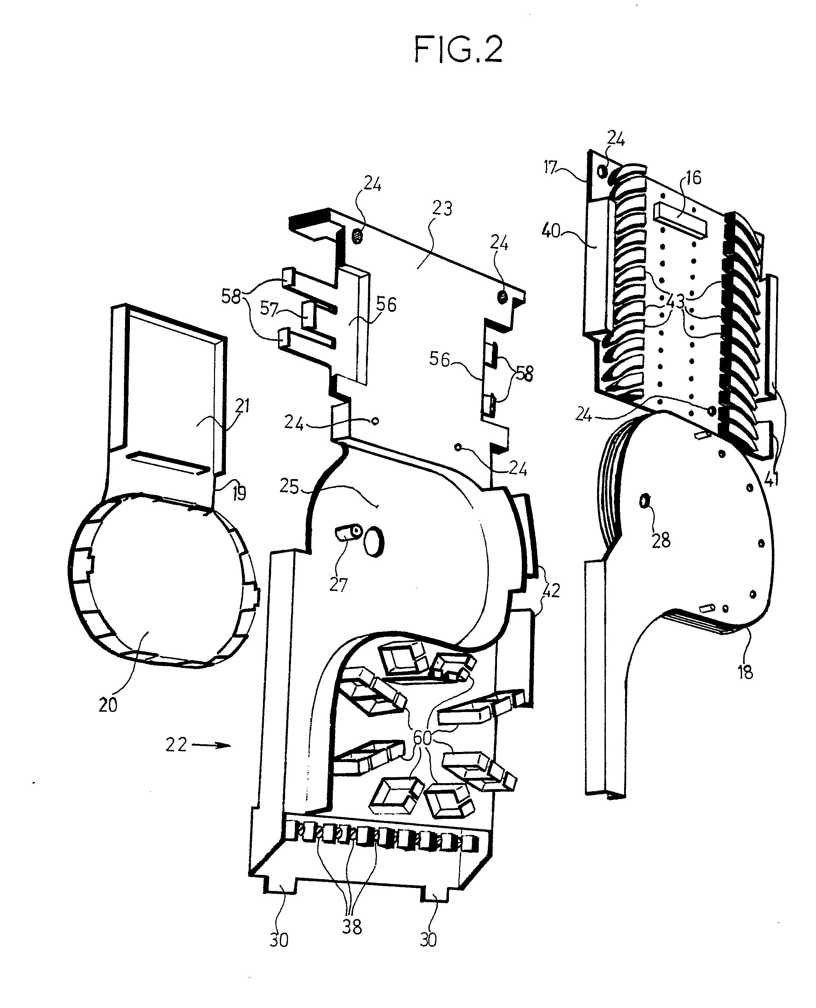

On va examiner maintenant, à l'aide des figures 2, 3 et 4, comment sont concrétisés et arrangés entre eux les différents éléments de la figure 1. Les bornes optiques 1, 2, et 3 sont montées, par exemple par encliquetage, -telle la borne optique 16-sur la platine 17 qui leur sert de support. Cette platine est prévue pour recevoir treize de ces bornes, c'est-à-dire quatre bornes 1 pour la desserte des quatre installations d'usager, une borne 2 pour la fibre de retour et huit bornes 3 pour raccorder les fibres de retour 13 des usagers ; on notera qu'à l'état initial seules existent quatre fibres de retour 13 puisqu'il n'y a que quatre installations d'usager desservies par le point de branchement. Cependant, on installe néanmoins, dès l'origine, huit bornes 3 car les liaisons entre ces bornes 3 et le coupleur 4 sont prévues, même à l'état initial, pour la capacité maximale, soit huit installations d'usager, et ce pour des raisons techniques qui tiennent à ce que le coupleur optique 4 est monté et connecté en usine et non sur le site, donc de façon rationnelle à sa capacité finale. Outre les bornes optiques 1, 2, 3, il rest donc à loger -par rapport à la figure 1-les longueurs de fibres 5, 6, 7, 8, 9 et 10 dont les moyens utilisés pour leur mise en réserve apparaissent sous trois types différents sur la figure 2.

Deux de ces types de moyens employés pour le stockage des longueurs de fibres mises en réserve ont fait l'objet de la demande de brevet déjà citée dans le préambule. L'un, le dispositif de stockage 18, est destiné à la constitution des loves de réserve 5 et 6 (figure 1) des cinq fibres du câble 11 reliant le point de branchement au centre de distribution. L'autre, le dispositif de stockage 19, permet de loger la réserve de neuf fibres optiques, à savoir huit longueurs de fibres 9 entre les bornes optiques 3 et le coupleur 4 et une longueur 8 entre ce même coupler et la borne optique 2 de la fibre de retour.

Ces deux dispositifs de stockage 18 et 19 ne seront pas décrits en détail puisqu'ils l'ont été dans la demande de brevet déjà citée. On se borners à rappeler que les neuf fibres du dispositif 19 -logées dans la partie inférieure 20-ainsi que les cinq fibres du dispositif 18 sont séparées les unes des autres par des intercalaires de sorte que chaque fibre soit indépendante de ses voisines et puisse être manipulée aisément et individuellement sans risque d'enchevêtrement des fibres les unes avec les autres. Chacun de ces dispositifs comporte des moyens pour déterminer les loves de longueur maximale et la boucle de rayon minimal correspondant à la courbure optimale admise pour les fibres optiques ; de plus, bien que cela n'apparaisse pas sur les figures, le coupleur optique 4 - (figure 1) se place dans le logement 21 situé à la partie supérieure du dispositif de stockage 19.

Le troisième type de moyens employés pour le stockage des longueurs de fibres mises en réserve est constitué par les anneaux de guidage 60 (figure 2) qui servent au lovage des fibres gainées 12 et 13 (figure 1) des câbles des installations d'usager Us1 à Us4 et forment les longueurs de réserve 7 et 10 de la figure 1.

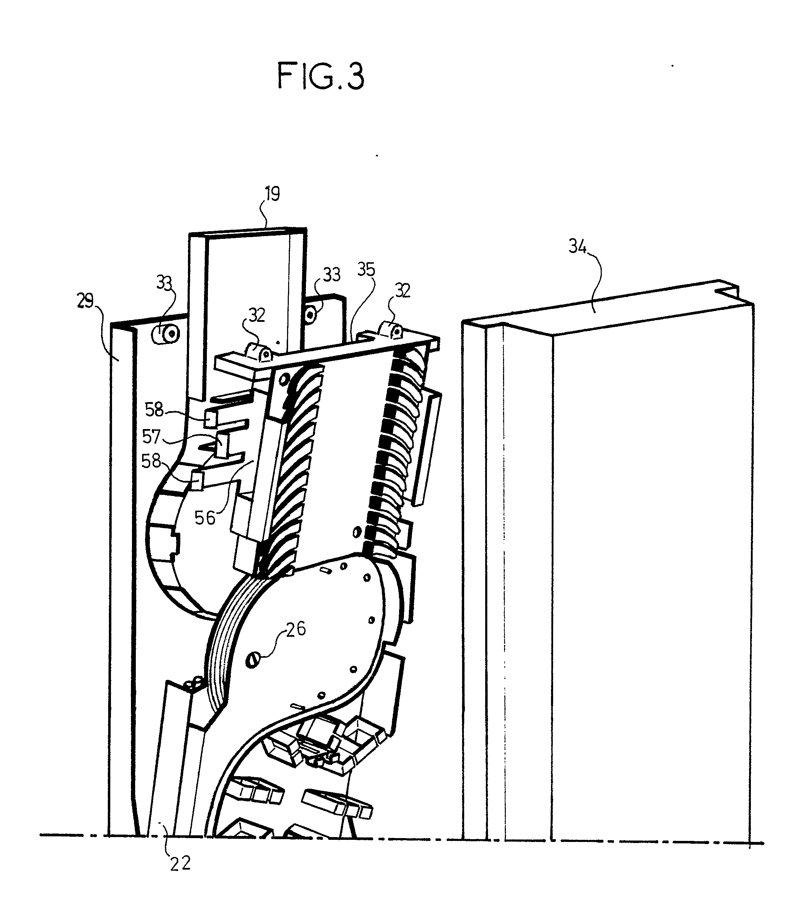

Tous les éléments de cette figure se retrouvant ainsi sur la figure 2, on voit qu'ils se montent sur une même platine générale 22. En effet, la platine 17 supportant les bornes optiques 16 s'applique contre la face 23 et y est fixée par vissage grâce aux orifices 24, ou par tout autre moyen connu visant le même résultat tel qu'un système d'encliquetage. Une empreinte 25 est prévue pour loger le dispositif de stockage 18 et, comme on le verra ultérieurement, la platine de bornes optiques servant à l'extension de la capacité du point de branchement. Ce dispositif de stockage est maintenu en place, par exemple, à l'aide d'une vis 26 (figure 3) coopérant avec le téton 27 (figure 2) qui s'introduit dans l'ouverture 28. La face non visible sur la figure 2 de la platine générale 22 comporte également une empreinte pour la mise en place - ou le retrait-du dispositif de stockage 19 et de son coupleur.

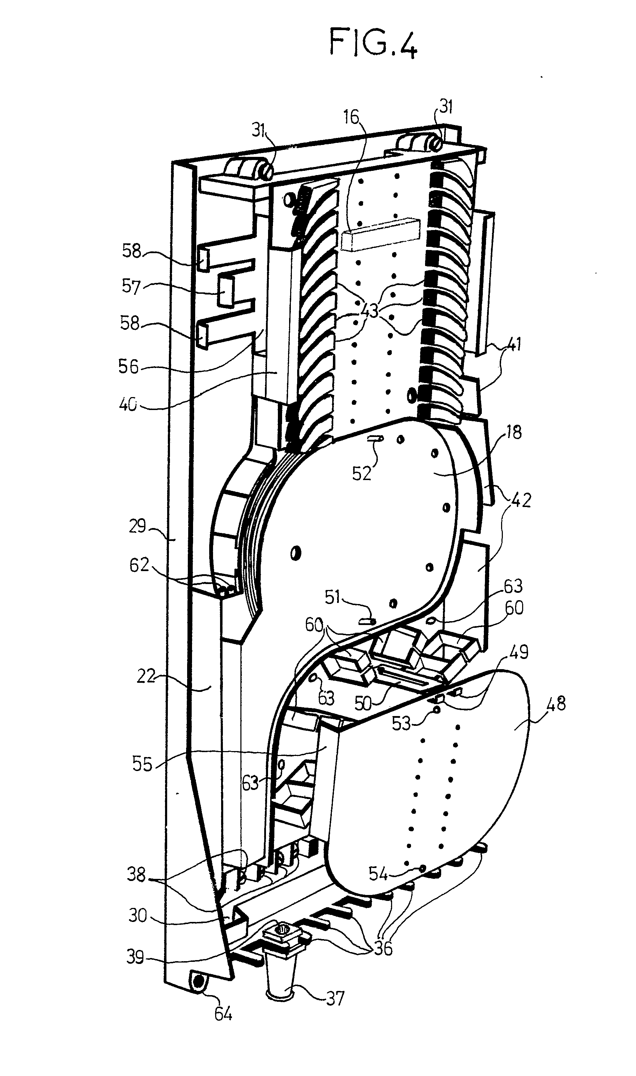

L'ensemble des éléments de la figure 2 -qui sont les éléments essentiels du point de branchement dans sa situaton initiale illustrée par la figure 1-est finalement monté sur un corps 29 - (figures 3 et 4) grâce aux deux pattes emboîtables 30 (figures 2 et 4) de la partie inférieure de la platine 22 et aux deux vis imperdables 31 de sa partie supérieure (figure 4) qui associent les bossages 32 de la platine 22 aux bossages 33 du corps 29 (figurs 3). Le couvercle 34 (figure 3) se monte par encliquetage sur le corps et se verrouille par une fermeture "quart de tour" ou une serrure, moyens connus qui ne sont pas représentés sur la figure ; il protège l'ensemble des éléments du point de branchement contre les agressions de l'environnement et sa face interne peut être munie d'un écran thermique, notamment dans le cas où le point de branchement est utilisé en extérieur.

On pourra remarquer le peu d'encombrement nécessité par les deux dispositifs de stockage 18 et 19 qui se présentent sous le forme de cassettes. En effet, si l'on considère la "cassette" 19 du coupleur, on voit sur la figure 3 qu'elle se glisse facilement entre la platine 22 et le corps 29 et se loge dans une empreinte de la face arrière de cette platine 22, empreinte dont on aperçoit la découpe supérieure 35. La manipulation est alors aisée puisque la platine 22 est maintenue verticalement grâce à ses deux pattes emboîtables 30 (figures 2 et 4). En ce qui concerne la "cassette" 18 du câble à cinq fibres, on voit qu'il suffit de retirer la vis 26 - (figure 3) pour la libérer du point de branchement et l'amener -au gré de l'agent d'intervention-dans la position la plus appropriée à la constitution des loves de réserve pour le câble à cinq fibres reliant le point de branchement au centre de distribution. La description relative à la formation de ces loves ne sera pas faite plus en détail puisqu'elle l'a été dans la demande de brevet citée précédemment en référence.

Si l'on examine maintenant la partie inférieure du corps 29 et de la platine 22 -sur la figure 4 par exemple-on voit que le corps comporte des doigts 36 entre lesquels sont montées des tétines en élastomère souple telles que la tétine 37 tandis que la platine comprend des vis 38, ces moyens ayant essentiellement pour rôle de rendre étanche le passage des câbles dans le point de branchement et de permettre leur arrimage. A cette fin, chaque câble à fibres optiques desservant une installation d'usager, de même que le câble à cinq fibres, traversent une tétine 37 par son ouverture centrale 39. Les vis 38 servent, d'une part, à fixer l'âme métallique ou plastique des câbles ayant traversé les tétines 37 afin d'éviter à leurs fibres optiques de subir les contraintes de traction auxquelles le câble pourrait être soumis à l'extérieur du point de branchement et, d'autre part, à raccorder les conducteurs électriques assurant les mises à la masse nécessaires.

On notera encore que la platine 22 ainsi que la platine 17 comportent des guides 40, 41 et 42 - (figures 2 et 4); ils facilitent le cheminement et le maintien des fibres optiques entre les différents éléments du point de branchement dont elles assurent le raccordement. Il en est de même pour les guides incurvés 43 dont la courbure est en rapport avec le rayon à imposer aux fibres qui aboutissent aux bornes optiques 16.

Jusqu'alors, on s'est attaché à décrire le point de branchement dans son état initial, c'est-à-dire dans l'état où il dessert quatre installations terminales d'équipements d'usager. On va examiner maintenant les moyens complémentaires qui sont utilisés pour faire passer le point de branchement à sa capacité maximale, c'est-à-dire desservant huit installations terminales.

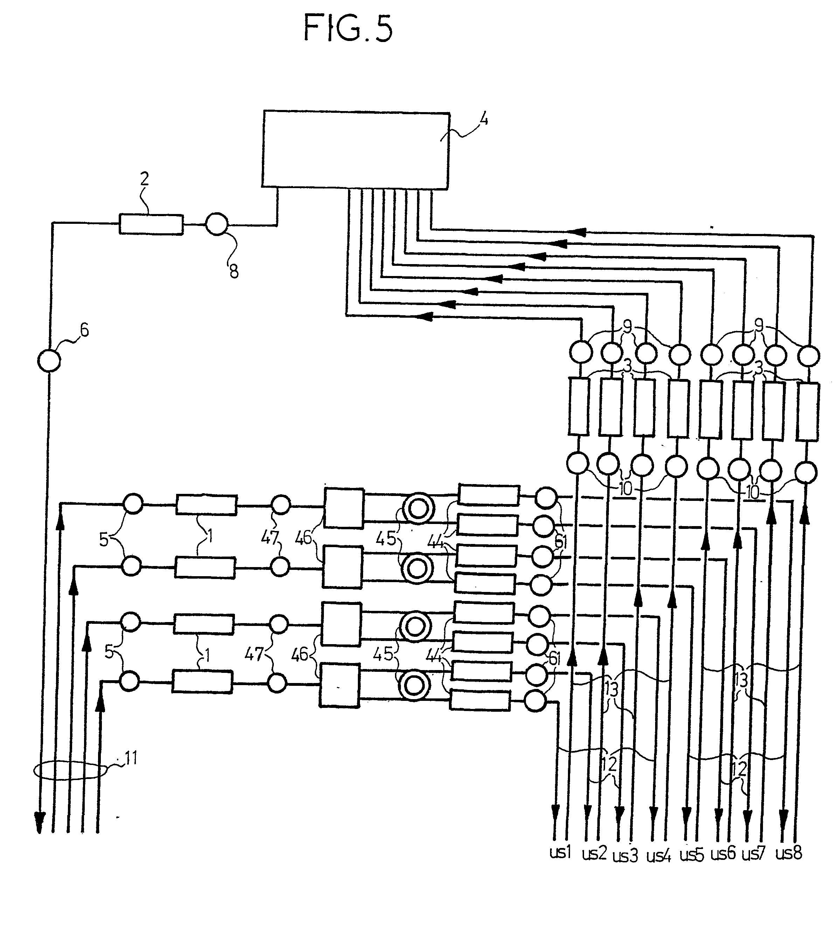

On se reportera tour d'abord à la figure 5 qui comporte schématiquement le matériel nécessaire à cette desserte maximale et on la comparera à la figure 1 qui correspond à l'équipement initial pour quatre installations d'usager.

On retrouve le câble 11 dont la capacité reste la même puisque c'est un câble passé une fois pour toutes entre le centre de distribution et le point de branchement ; on retrouve aussi ses loves de réserve 5 et 6 puisqu'ils ont déjà été constitués lors de l'état initial dans la "cassette"à cinq fibres 18 ; de même, à la sortie de cette "cassette" 18, les cinq fibres aboutissent déjà chacune à une borne optique 16, après le passage entre des guides 43 (figure 4), ce qui correspond aux bornes optiques 1 et 2 des figures 1 et 5. Le raccordement du coupleur 4 reste également identique à ce qu'il était à l'état initial puisque, on l'a expliqué précédemment, ses loves de réserve sont constitués en usine, dans la partie 20 (figure 2), à la capacité maximale de huit fibres (ce sont les loves de réserve 9), une fibre commune de retour correspondant au love de réserve 8, ces réserves de fibres aboutissant respectivement aux bornes optiques 2 et 3.

Si ces éléments sont restés sans changement malgré l'extension du point de branchement à sa capacité finale, on voit que les câbles desservant les installations terminales d'usager sont passés de quatre à huit (Us1 à Us8), quatre nouvelles fibres de retour 13 se trouvant connectées à des bornes optiques 3 après constitution des loves de réserve 10.

En ce qui concerne les fibres 12, par rapport à la figure 1, on voit qu'elles ont été débranchées des bornes optiques 1 et aboutissent maintenant aux huit bornes optiques d'extension 44. L'autre extrémité de ces bornes 44 est reliée-après constitution des longueurs de fibres en réserve 45 -à l'une des deux sorties de 4 multiplexeurs 46 qui jouent chacun le rôle de séparateur d'ondes optiques; on peut ainsi desservir huit usagers avec la même capacité de quatre fibres du câble 11, chaque fibre de ce câble véhiculant alors deux ondes porteuses jusqu'au démultiplexeur qui lui est associé et qui assure la séparation de ces deux deux ondes optiques. A son tour, chaque entrée de démultiplexeur 46 est branchée sur une borne optique 1 après constitution d'une longueur de fibre en réserve 47 correspondante.

On va examiner maintenant en se reportant à la figure 4 comment concrètement se traduisent ces modifications de câblage et ces adjonctions de matériel.

En ce qui concerne le matériel, on a vu qu'il consiste à équiper le point de branchement de huit nouvelles bornes optiques 44 et de quatre démultiplexeurs 46. Pour ce qui est des bornes optiques 44 (figure 5), elles sont identiques aux bornes optiques 3, c'est-à-dire qu'elles se présentent comme la borne optique 16, entre des güides incurvés strictement identiques aux guides 43 de l'équipement initial de la figure 4. Ce matériel complémentaire est monté sur la face cachée sur la figure 4 de la platine d'extension 48. En effet, celle-ci est vue du côté de sa face arrière pour illustrer la position qu'elle occupe dans le cas où l'on veut accéder à la "cassette" 18 du câble à cinq fibres ; elle est accrochée à deux pattes 49 solidaires d'une glissière 50. En position normale, la platine 48 est libérée des pattes 49 et elle se monte contre la "cassette" 18 à l'aide des pions de guidage 51 et 52, le pion 51 s'engageant dans l'ouverture 53 et le pion 52 dans l'ouverture 54 de la platine d'extension. On remarquera que l'adjonction de cette platine 48 sur la platine 18 n'augmente pas l'épaisseur du point de branchement; de plus, un guide 55 est prévu pour le passage et le maintien des fibres optiques du câblage d'extension.

Les quatre démultiplexeures 46 de la figure 5 ne sont pas dessinés sur la figure 4; ils se présentent sous la forme de parallélépipèdes rectangles munis de fibres optiques de raccordement. Ils sont logés dans les deux ouvertures latérales 56 (figures 2, 3 et 4) à raison d'une paire par ouverture. Cependant, comme il est possible de n'avoir à rajouter qu'une partie des quatre démultiplexeurs selon l'importance de l'extension, on a prévu de pouvoir loger dans chaque ouverture un ou deux démultiplexeurs grâce aus pattes de maintien 57 et 58. Ainsi, lorsqu'un seul démultiplexeur est équipé, il est pris en sandwich dans la platine 22 et se trouve maintenu en place par la patte 57 de plus courte longueur. Lorsque le deuxième démultiplexeur doit être mis en place, on pousse le premier dans le fond de l'ouverture 56 et le second vient se placer contre le précédent, la patte 57 s'éclipsant élastiquement vers l'arrière et le maintien de ce second démultiplexeur se faisant alors par l'action des deux pattes 58.

Outre ces adjonctions de matériel, on a vu que l'extension de la capacité du point de branchement se traduit également par des modifications du câblage initial, notamment du câblage dans lequel intervenaient les longueurs de réserve 7 (figure 1) qui résultaient du passage des fibres optiques correspondantes dans les anneaux de guidage 60 (figures 2 et 4) ; les huit fibres 12 (figure 1) des câbles d'installations d'usager Us1 à Us8 forment désor mais leurs longueurs de réserve 61 (Figure 5) dans ces mêmes anneaux 60 avant d'aboutir sur les huit nouvelles bornes optiques 44 (figures 5) de la platine d'extension 35 (figure 4).

De leur côté, les démultiplexeurs doivent constituer, grâce à ces anneaux 60, les longueurs de réserve 45 et 47 (figure 1). Pour ce faire, on voit sur la figure 4 que les fibres optiques de ces démultiplexeurs devraient changer de plan pour atteindre les anneaux 60 et, notamment, passer sur la face de la platine d'extension 18, ce qu'il convient d'éviter pour faciliter les manipulations pas les agents d'intervention. On a donc prévu, sur la face arrière de la platine générale 22, des tubes 62 (figure 4) qui débouchent sur la face avant de la platine 22 au niveau des anneaux de guidage 60 de façon telle que leurs orifices respectifs 63 permettent aux fibres optiques d'emprunter les anneaux 60, soit dans un sens ou dans l'autre pour constituer les lovages nécessaires à la constitution des réserves de fibres en ne leur imposant pas de rayon de courbure qui soit inférieur à celui admissible -quelques centimètres pour qu'elles conservent leurs caractéristiques de transmission.

Finalement, on notera la présence de deux bossages à la partie inférieure du corps 29, un seul de ces bossages 64 étant visible sur la figure 4. Ces bossages sont munis chacun d'une ouverture qui permet l'accrochage d'un dispositif de maintien pour installer un plateau de travail -non représenté sur les figures-destiné à recevoir le matériel nécessaire aux interventions sur les fibres optiques du point de branchement.

Il est bien évident que la description qui précède n'a été faite qu'à titre d'exemple non limitatif et que de nombreuses variantes peuvent être envisagées sans sortir pour autant du cadre de l'invention.

## Revendications

1.Point de branchement pour câbles à fibres optiques permettant d'effectuer la connexion entre des fibres optiques reliées, d'une part, à un centre exploitant les signaux échangés dans un réseau de vidéocommunication et, d'autre part, à des installations terminales d'équipements d'usager d'un tel réseau, point de branchement constitué essentiellement par des éléments (1, 2, 3 et 16) pour la connexion optique des fibres, un élément (4) pour le couplage optique entre des fibres d'installations terminales d'usager et une fibre du réseau de vidéocommunication, des éléments (18, 20, 60) pour le stockage de longueurs de fibres optiques mises en réserve (5, 6, 7, 8, 9, 10, 45, 47 et 61)-,caractérisé par le fait qu'il comporte une platine - (22) utilisée sur ses deux faces pour le montage de tous ces éléments, chaque face comportant au moins une empreinte servant au logement d'un élément (18, 20, 60) pour le stockage des longueurs de fibres optiques mises en réserve et de l'élément (4, 21) pour le couplage optique, les éléments (1, 2, 3, et 16) pour la connexion optique des fibres étant associés à l'une des faces de la platine (22) sur une partie sans empreinte de façon à déterminer l'épaisseur maximale de la platine (22) quand elle est équipée de tous lesdits éléments.

2. Point de branchement pour câbles à fibres optiques conforme à la première revendication, caractérisé par le fait que la face arrière de la platine (22) comporte une empreinte (35) permettant de loger de façon amovible entre cette face et le corps (29) du point de branchement un ensemble - (19) composé de l'élément (4, 21) pour le couplage optique et de l'élément (20) pour le stockage des longueurs de fibres (8, 9) mises en réserve propres audit élément pour le couplage optique.

3. Point de branchement pour câbles à fibres optiques conforme à la première revendication,caractérisé par le fait que la face avant de la platine (22) comporte deux empreintes pour le logement des éléments (18, 60) pour le stockage des longueurs de fibres (5, 6, 7, 10, 45, 47 et 61) mises en réserve.

4. Point de branchement pour câbles à fibres optiques conforme à la première revendication dans lequel le passage de la capacité de desserte initiale à la capacité finale s'obtient grâce à l'adjonction d'éléments complémentaires (44, 48) pour la connexion optique des fibres et d'éléments(46) séparateurs d'ondes optiques capables de recevoir deux ondes optiques porteuses mélangées et de les distribuer individuellement en sortie, caractérisé par le fait que la platine (22) comporte deux logements latéraux (56) susceptibles chacun de recevoir deux de ces éléments séparateurs d'ondes optiques (46), ces logements (56) étant associés à des pattes (57, 58) de longueurs différentes, la ou les pattes de plus courte longueur (57) servant au maintien d'un élément séparateur (46) lorsqu'il est seul dans le logement (56), la ou les pattes de plus grande longueur (58) permettant de maintenir deux éléments séparateurs (46) dans ledit logement - (56).

5. Point de branchement pour câbles à fibres optiques conforme à la quatrième revendication, caractérisé par le fait qu'il comporte une plaque amovible (48) équipée des éléments (44) complémentaires pour la connexion optique, cette plaque (48) s'associant par sa plus grande surface à l'élément (18) pour le stockage des fibres mises en réserve, des pattes (49) d'une glissière (50) solidaire de la platine (22) assurant l'accrochage de la plaque (48) lorsqu'elle est dissociée de l'élément (18) pour le stockage des fibres.

6. Point de branchement pour câbles à fibres optiques conforme à la première revendication, caractérisé par le fait que la platine (22) comporte des moyens (37) rendant étanche le passage des câbles à fibres optiques entre l'extérieur et l'intérieur du point de branchement ainsi que des moyens (38) pour l'amarrage de l'âme métallique ou plastique de ces câbles.

7. Point de branchement pour câbles à fibres optiques conforme à la première revendication, caractérisé par le fait que la platine (22) est associée à des conduits (62) qui traversent son épaisseur pour permettre aux fibres optiques de passer de l'une à l'autre face de la platine (22), une telle disposition facilitant le câblage et évitant aux fibres devant passer d'un plan à un autre de se trouver devant des éléments amovibles et d'en gêner ainsi la manipulation.

# FIG.1

# FIG.2

# FIG.3

# FIG.4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | DE-A-3 217 320 (ANT)<br>* Revendications; figures 1,10 * | 1 | G 02 B 6/44<br>G 02 B 6/24 |
| A | | 3,5 | |
| | --- | | |
| Y | FR-A-2 515 466 (L.T.T.)<br>* Revendications * | 1 | |
| | ----- | | |

DOMAINES TECHNIQUES
RECHERCHES (Int. Cl.4)

G 02 B

Le présent rapport de recherche a été établi pour toutes les revendications

| Lieu de la recherche | Date d'achèvement de la recherche | Examinateur |
|---|---|---|
| LA HAYE | 26-08-1986 | PFAHLER R. |

OEB Form 1503 03 82

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant